# FASCICULE DE BREVET EUROPEEN

(11) **EP 2 457 756 B1**
(45) Date de publication et mention de la délivrance du brevet: **12.08.2015**
(21) Numéro de dépôt: 11191017.0
(22) Date de dépôt: 28.11.2011
(51) Int. Cl.: B60J 7/02, B60J 7/043

(54) **Pavillon vitré à panneau mobile coulissant et entrebâillant**
Verglaster Pavillon mit beweglichen Schiebe- und Öffnungspaneelen
Glazed pavilion with tilting and sliding mobile panel

(30) Priorité: 26.11.2010 FR 1059818; 10.03.2011 FR 1151995
(43) Date de publication de la demande: 30.05.2012
(73) Titulaire: Advanced Comfort Systems France SAS - ACS France, 79302 Bressuire Cedex (FR)
(72) Inventeur: Desbois, Mickaël, 79200 Parthenay (FR)
(74) Mandataire: Vidon Brevets & Stratégie

(56) Documents cités:
- EP-A1- 1 314 600
- EP-A2- 1 493 601
- US-A- 5 765 908

## Description

Le domaine de l'invention est celui des baies vitrées pour véhicules automobiles, et plus précisément pour les pavillons de tels véhicules. Plus précisément, l'invention concerne de tels dispositifs d'obturation comprenant au moins une ouverture coopérant avec un panneau vitré mobile coulissant, et en particulier des dispositifs connus sous le nom « baie flush », conçus pour être montés de façon affleurante avec la carrosserie.

Dans le cadre de la présente demande de brevet, on entend par le terme « panneau vitré » tout panneau, fixe ou mobile par rapport à la carrosserie, substantiellement transparent ou translucide, participant au clair de baie. Un tel panneau peut être réalisé en verre ou en tout matériau adapté, tel que le polycarbonate. Dans certains modes de réalisation, le panneau peut être constitué de plusieurs éléments affleurants, vu de l'extérieur. Le cas échéant au moins un de ces éléments peut être opaque et par exemple en métal ou en plastique. Par ailleurs, les bords d'un panneau vitré peuvent être opacifiés, par exemple par sérigraphie.

Un dispositif selon l'invention peut en outre équiper une baie formée dans une partie sensiblement horizontale autre que le pavillon du véhicule.

Il est actuellement souhaité, en matière de véhicule automobile, de proposer de plus en plus de surface vitrée. En particulier, on a proposé des véhicules présentant un pavillon équipé d'un ou plusieurs éléments vitrés. Dans certains cas, l'intégralité du pavillon est en verre, ou en un matériau similaire laissant passer la lumière, et notamment les rayons du soleil. Des solutions ont été également proposées pour dégager des ouvertures dans un tel pavillon, notamment pour pouvoir former un toit ouvrant. Ainsi, une technique répandue pour libérer une ouverture dans le pavillon consiste à faire basculer une vitre mobile, montée sur un cadre, vers l'extérieur du véhicule autour d'un axe solidaire du pavillon pour libérer un passage entre la vitre et le cadre.

Une autre technique de toit ouvrant également utilisée consiste à rendre la vitre mobile coulissante, au-dessus ou au-dessous du pavillon, dans un plan sensiblement parallèle à celui-ci:
On a également proposé de combiner ces deux approches, pour permettre alternativement d'entrebâiller le panneau mobile, ou de libérer totalement l'ouverture dans le pavillon par escamotage du panneau mobile. Le document US 5 765 908 A divulgue la mise en oeuvre dans un toit ouvrant de véhicule d'une vitre mobile qui peut soit pivoter autour d'un axe et ainsi être inclinée par rapport à la partie fixe du toit, soit être déplacée en coulissement au-dessus de la partie fixe.

Un inconvénient de ces techniques connues est qu'elles nécessitent des moyens complexes pour contrôler les différents mouvements devant être appliqués au panneau mobile selon les cas :
- dégagement ou louvoiement, pour passer de la position fermée dans laquelle le panneau mobile se trouve dans le plan du panneau fixe du pavillon, à un plan parallèle permettant le coulissement ;
- coulissement, pour éloigner le panneau mobile de l'ouverture, et le ramener au-dessus de celle-ci ;
- basculement pour assurer l'entrebâillement.

Ces mouvements distincts supposent un nombre élevé de pièces mobiles, et donc un encombrement et un poids relativement importants, ainsi qu'un assemblage, un réglage et une maintenance relativement complexes (étant rappelé que, notamment, l'étanchéité en position fermée doit dans tous les cas être assurée de façon efficace). La motorisation de ces différents déplacements est également complexe.

L'encombrement et la complexité de ces moyens est un inconvénient d'autant plus important que le pavillon est vitré, puisqu'il faut alors dissimuler, à l'aide de sérigraphie, les différentes pièces mécaniques, ce qui va à rencontre de l'objectif de maximisation de la surface vitrée, ou clair de baie.

L'invention a notamment pour objectif de palier ces inconvénients de l'art antérieur.

Plus précisément, l'invention a pour objectif de fournir un dispositif vitré d'obturation d'une baie formée dans un véhicule automobile, et notamment un pavillon vitré, dans lequel le panneau mobile peut être entrebâillé ou déplacé en coulissement de façon simple, efficace et fiable.

Ainsi, un objectif de l'invention est de fournir une technique permettant d'assurer l'entrebâillement et le coulissement à l'aide de moyens présentant un encombrement et un poids réduit, et un faible nombre de pièces.

Un autre objectif de l'invention est de fournir une telle technique, permettant un actionnement et une motorisation, au moins dans un certain mode de réalisation, qui soit particulièrement simple.

Ces objectifs, ainsi que d'autres qui apparaîtront par la suite sont atteints à l'aide d'un pavillon vitré de véhicule automobile selon la revendication 1.

Ainsi, avec un déplacement dans une seule direction des navettes, il est possible non seulement d'assurer l'ouverture et la fermeture vanneau mobile, par coulissement parallèlement au panneau fixe et mouvement pour venir dans le plan du panneau fixe, dans la position fermée, mais également une fonction d'entrebâillement du panneau mobile, à partir de cette position fermée.

Ce mécanisme permet des cinématiques complexes, pour le panneau mobile, à partir d'un déplacement simple, et donc aisément contrôlable et motorisable, des navettes, avec un nombre réduit d'éléments simples et peu coûteux.

Selon un mode de réalisation particulier, ladite troisième piste est ouverte à l'une de ses extrémités, de façon à se désolidariser dudit deuxième pion lors du mouvement de coulissement.

Dans ce cas, ladite extrémité ouverte de ladite troisième piste peut se prolonger par une première portion parallèle à l'axe de déplacement de la navette, puis par une deuxième portion inclinée par rapport audit axe de déplacement.

Le basculement pour l'entrebâillement est mis oeuvre lorsque le deuxième pion se déplace dans cette deuxième portion.

Dans un mode de réalisation particulier, ladite troisième piste est portée par une pièce de liaison portant également ledit premier pion, ce dernier étant conçu de façon à autoriser le basculement du panneau mobile.

Selon une mise en oeuvre particulière, ladite première piste peut présenter :
- une première extrémité, avec laquelle ledit premier pion est en butée, lors du mouvement de coulissement ;
- une première portion, s'étendant transversalement par rapport à l'axe de déplacement de la navette, à partir de ladite première extrémité, et dans laquelle se déplace ledit premier pion lors du mouvement de louvoiement ;
- une deuxième portion s'étendant parallèlement à l'axe de déplacement de la navette, à partir de ladite première portion, dans laquelle se trouve ledit premier pion dans ladite position d'obturation ;
- une troisième portion s'étendant transversalement par rapport à l'axe de déplacement de la navette, à partir de ladite deuxième portion, dans laquelle se déplace ledit premier pion lors du début dudit basculement ;
- une seconde extrémité, avec laquelle ledit premier pion est en butée, lors de la fin dudit basculement.

Dans un mode de réalisation particulier, lesdites navettes sont reliées audit panneau mobile au voisinage d'une première extrémité de ce dernier, dite extrémité distale, selon l'axe de déplacement desdites navettes, et ledit panneau mobile est solidaire, au voisinage de sa seconde extrémité, dite extrémité proximale, de biellettes permettant de contrôler, complémentairement avec lesdits deuxièmes pions, le basculement du panneau mobile.

Dans ce cas, chacune desdites biellettes peut être montée mobile en rotation par rapport audit panneau mobile, et porte un troisième et un quatrième pions guidés respectivement dans une quatrième et cinquième pistes formées dans un deuxième rail, s'étendant dans le prolongement d'un desdits premiers rails.

Lesdites quatrième et cinquième pistes peuvent être configurées pour contrôler le déplacement de ladite extrémité proximale du panneau mobile lors dudit basculement, dudit louvoiement et dudit coulissement.

Notamment, lesdites quatrième et cinquième pistes peuvent présenter :
- une première portion, correspondant au mouvement de coulissement, dans laquelle elles s'étendent parallèlement à l'axe dudit deuxième rail ;
- une deuxième portion, correspondant au mouvement de louvoiement, dans laquelle lesdits troisième et quatrième pions sont guidés de façon à s'aligner sensiblement parallèlement à l'axe dudit deuxième rail, lorsque le panneau mobile est dans sa position d'obturation ;
- une troisième portion, correspondant audit basculement, dans laquelle elles s'éloignent l'une de l'autre, de façon que ladite biellette se redresse.

Dans un mode de réalisation particulier, le pavillon vitré comprend des moyens de verrouillage du panneau mobile dans ladite position d'obturation.

Préférentiellement, les moyens de verrouillage du panneau mobile comprennent au moins un élément (bras, levier, ...) solidaire en rotation du panneau mobile et apte à coopérer avec des moyens de blocage fixes.

Les moyens de blocage peuvent prendre la forme d'un axe ou d'un pion monté sur un rail de guidage par exemple.

L'invention concerne également les véhicules automobiles équipés d'un pavillon tel que décrit ci-dessus.

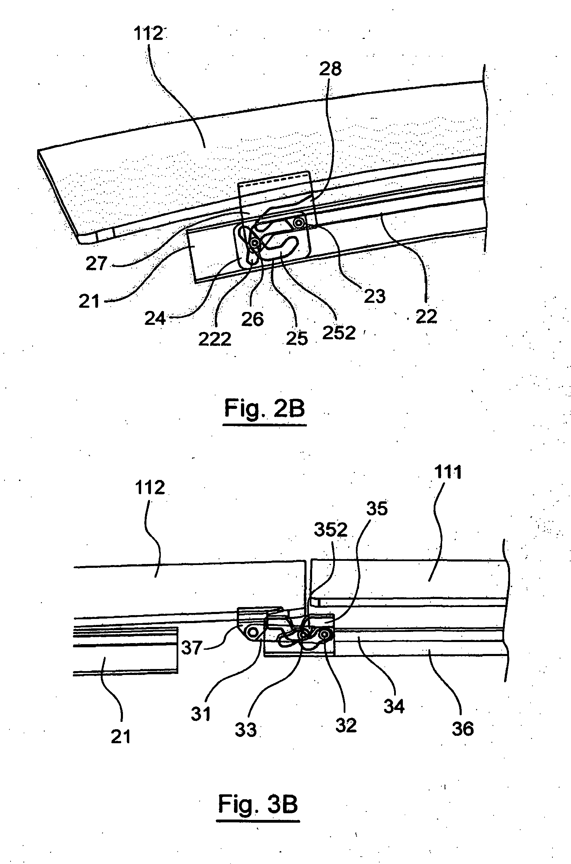

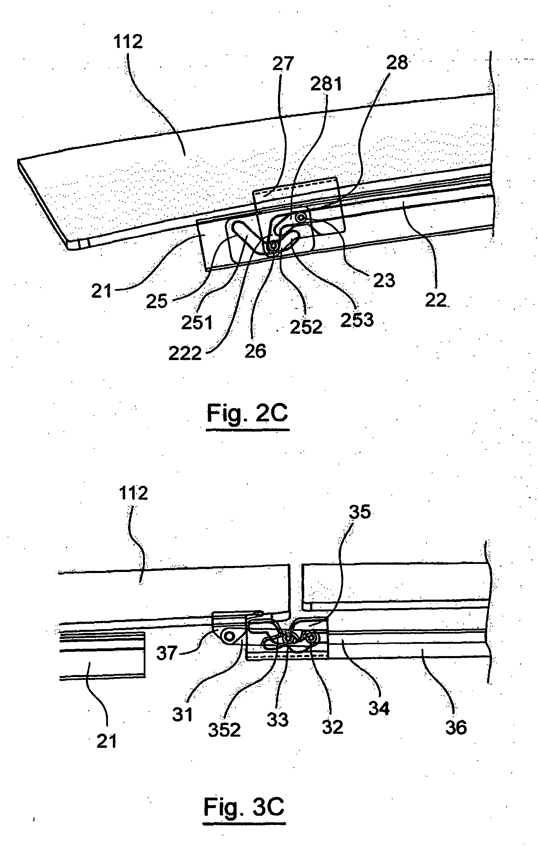

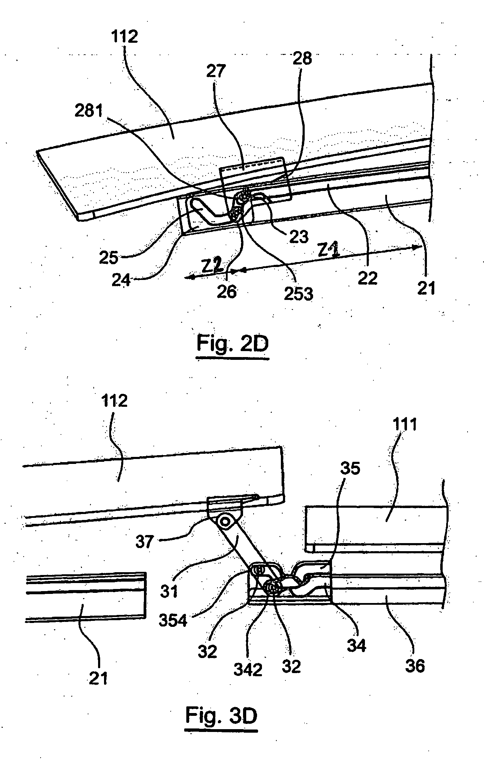

D'autres caractéristiques et avantages de l'invention apparaîtront plus clairement à la lecture de la description suivante d'un mode de réalisation particulier de l'invention, donné à titre de simple exemple illustratif et non limitatif et des dessins annexés, parmi lesquels :

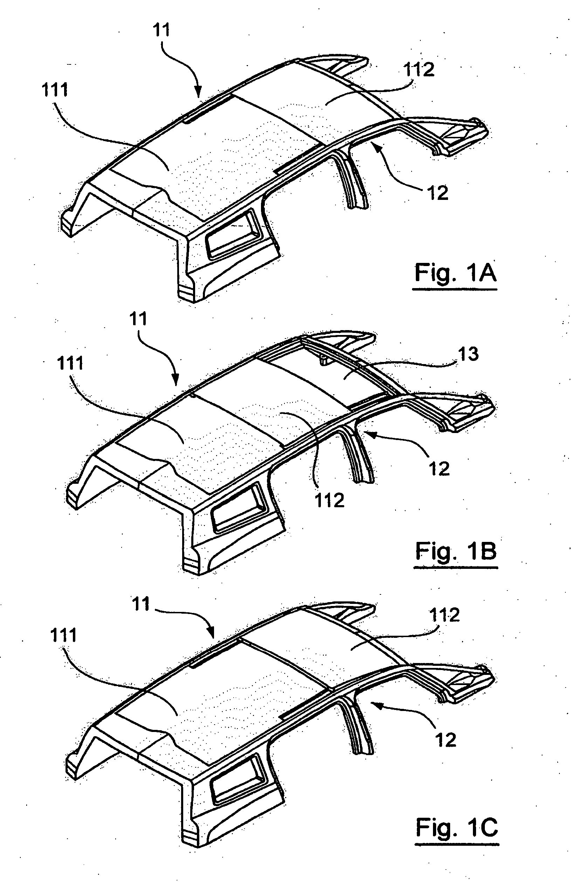

- les figures 1A à 1C illustrent la partie supérieure de la carrosserie d'un véhicule automobile, équipé d'un dispositif d'obturation, en l'occurrence un pavillon vitré, selon l'invention respectivement :
   ■ figure 1A : panneau mobile en position fermée ;
   ■ figure 1B : panneau mobile en position ouverte après coulissement ;
   ■ figure 1C : panneau mobile en position entrebâillée ;

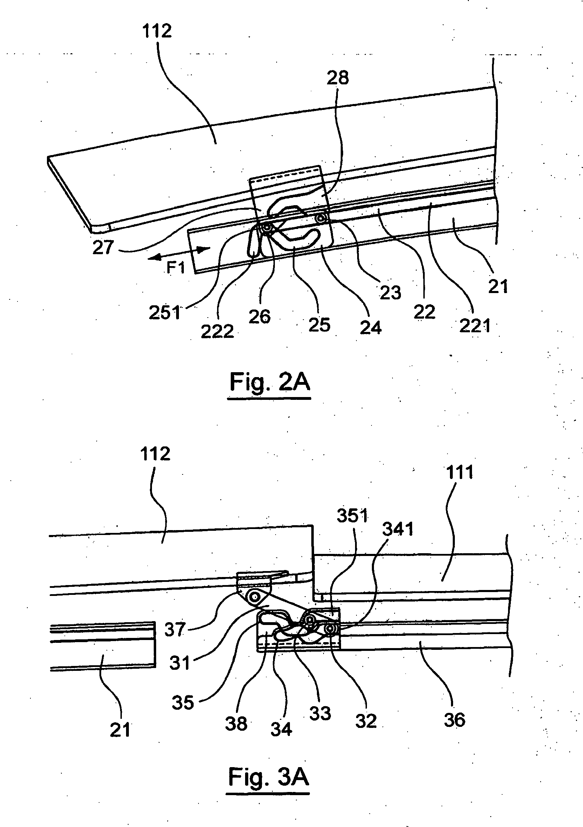

- les figures 2A à 2D et 3A à 3D illustrent respectivement, schématiquement, les moyens assurant la mobilité du panneau mobile d'une part à proximité de l'axe de basculement pour l'entrebâillement (figures 2A à 2D), c'est-à-dire selon les figures 1A à 1C du côté du panneau mobile orienté vers l'avant du véhicule (appelé par la suite extrémité distale), et d'autre part au voisinage du bord opposé (appelé par la suite extrémité proximale) (figures 3A à 3D) :
   ■ figures 2A et 3A : le panneau mobile étant dans le plan de coulissement ;
   ■ figures 2B et 3B : le panneau mobile étant en cours de fermeture ou d'ouverture, en position de louvoiement ;
   ■ figures 2C et 3C : le panneau mobile étant en position fermée, l'ouverture étant obturée ;
   ■ figures 2D et 3D : le panneau mobile étant en position entrebâillée ;

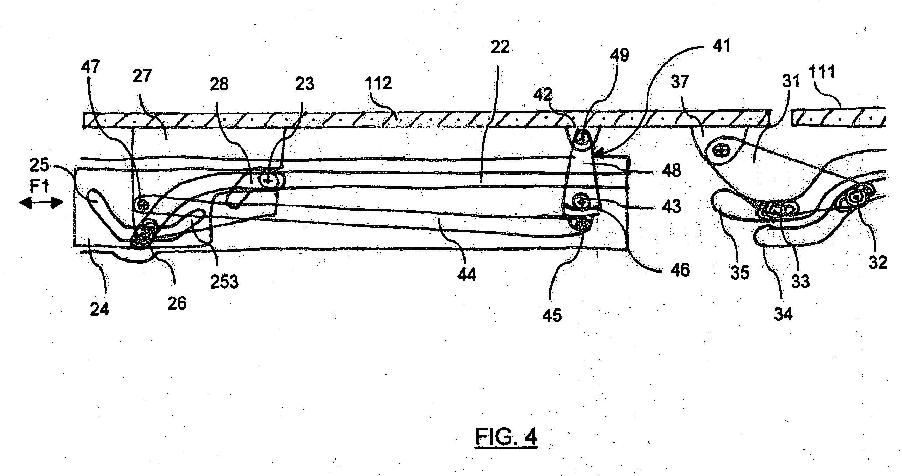

- la figure 4 illustre les moyens assurant le verrouillage du panneau mobile en position fermée, l'ouverture étant obturée.

L'invention concerne donc un dispositif d'obturation d'une baie d'un véhicule automobile, formé dans ou formant un pavillon vitré. Le mode de réalisation décrit ci-après concerne donc un pavillon vitré.

Comme illustré sur les figures 1A à 1C, le pavillon vitré est un ensemble 11 pré-assemblé comprenant :
- un panneau fixe 111, dont les bords sont dimensionnés pour être solidarisés aux bords correspondant de la carrosserie 12 du véhicule, ou de son châssis, dont seule la partie supérieure illustrée, par exemple par collage ;
- un panneau mobile 112, pouvant être déplacé par rapport au panneau fixe 111, pour obturer ou libérer une ouverture 13 définie à côté du panneau fixe 111 ;
- des moyens décrits plus en détail par la suite (rails, pions, biellettes, motorisation...) permettant de contrôler le déplacement du panneau mobile 112.

Dans la position fermée illustrée par la figure 1A, le panneau mobile 112 se trouve dans le plan ou dans la continuité, du panneau fixe 111. Il obture de façon étanche, des joints d'étanchéité (non illustrés) étant prévus à cet effet, l'ouverture 13 ménagée dans le pavillon, et affleure avec le panneau fixe, ainsi que, dans ce mode de réalisation, avec le pare-brise du véhicule. Il peut également être affleurant avec une pièce ou élément transversal, par exemple une traverse.

Dans la position illustrée par la figure 1B, l'ouverture 13 est dégagée, le panneau mobile 112 ayant été déplacé par rapport au panneau fixe, et placé sensiblement parallèle à celui-ci à l'extérieur du véhicule.

De façon connue en soi, l'ouverture, à partir de la position illustrée par la figure 1A, se fait en deux temps : un dégagement du panneau mobile 112 au-dessus de l'ouverture, soit par un mouvement selon un axe perpendiculaire au plan défini par le panneau fixe, soit par un mouvement de louvoiement, puis un déplacement en translation, ou coulissement.

Il est à noter que les termes « plan », « parallèle » et « perpendiculaire » doivent être interprétés de façon large. En effet, comme il apparaît sur les figures, le pavillon 11 peut être sensiblement incurvé, dans une ou plusieurs directions. Dans ce cas, le « plan » doit être interprété comme étant la surface de référence définie par le pavillon.

Outre ce mouvement d'ouverture, on prévoit selon l'invention, que le panneau mobile 112 peut être basculé, autour d'un axe placé sensiblement dans le plan du panneau fixe, vers l'avant du véhicule, comme illustré par la figure 1C pour prendre une position entrebâillée.

Selon l'invention, ces différents mouvements du panneau mobile sont contrôlés à partir du déplacement de deux navettes, une de chaque côté du pavillon, mobiles selon une seule direction, le long et à l'intérieur de rails prévus à cet effet.

Les figures 2A à 3D illustrent plus précisément le fonctionnement du dispositif de l'invention, selon un mode de réalisation préférentiel. Les figures 2A à 2D présentent schématiquement la partie du panneau mobile la plus proche de l'avant du véhicule, appelée extrémité distale, et l'un des rails correspondant (un second rail identique étant placé de l'autre côté du véhicule). Les figures 3A à 3D présentent l'autre côté du panneau mobile, appelé extrémité proximale, et le rail correspondant.

Le premier rail 21 porte une piste 22, dite deuxième piste, guidant un pion 23, dit deuxième pion, coopérant avec une navette 24, mobile en translation dans le rail 21. Selon l'approche de l'invention, cette navette se déplace dans une seule direction le long du rail (flèche F1), ce déplacement permettant d'assurer les différents mouvements du panneau mobile 112, grâce aux différents pions et aux différentes pistes.

La navette 24 porte une piste 25, dite première piste, dans laquelle est guidé un pion 26, dit premier pion, solidaire du panneau mobile 112, par l'intermédiaire d'une pièce de liaison 27. Cette pièce de liaison porte une troisième piste 28, qui n'est pas utilisée dans la position de coulissement de la figure 2A (correspondant à la position de la figure 1B). Dans cette position, le premier pion 26 est en butée dans la première piste 25, au niveau d'une première extrémité 251. Dans cette position, ce premier pion 26 est guidé en translation, lorsque la navette 24 est déplacée dans le rail 21, le long de la partie droite 221 de la deuxième piste, qui est parallèle à l'axe du rail 21. Ce déplacement assure le coulissement du panneau mobile 112, au-dessus du panneau fixe, pour libérer l'ouverture ménagée dans le pavillon.

La fermeture du panneau mobile 112 comprend tout d'abord un coulissement dans le sens inverse, pour ramener ce panneau mobile au voisinage de l'ouverture. Ensuite, comme cela apparaît sur la figure 2A, le premier pion 26 arrive au voisinage d'une partie inclinée 222 de la deuxième piste 22. L'introduction du premier pion 26 dans cette partie inclinée va entraîner l'abaissement de l'extrémité distale du panneau mobile, de façon qu'il vienne progressivement en appui contre le rebord ou le joint d'étanchéité correspondant.

Dans le même temps, du fait que la pièce de liaison est rabaissée par rapport aux rails, la troisième piste 28 vient se placer en regard du deuxième pion 23. La forme évasée de l'extrémité ouverte de cette piste permet d'accueillir et guider le pion 23 vers la portion de guidage de la piste.

Ceci apparaît plus clairement sur la figure 2B. On constate, sur cette figure, que, dans le même temps, le premier pion 26 se déplace le long d'une première partie inclinée 251 de la première piste 25, puisque la navette 24 se déplace toujours parallèlement aux rails 21, pendant que la partie mobile 112 est abaissée.

Lorsque le panneau mobile 112 est complètement fermé, le premier pion 26 se trouve en butée inférieure de la partie inclinée 222 de la piste 22, et dans une deuxième partie 252 de la première piste 25, parallèle à l'axe du rail 21, comme illustré par la figure 2C. Dans le même temps, le second pion 23 est guidé dans une première partie 281, parallèle à l'axe du rail, de la troisième piste 28.

Pour obtenir l'entrebâillement à partir de cette position fermée de la figure 2C, on continue à déplacer la navette 24 dans le rail 21. Ceci est illustré par la figure 2D. La première piste 25 guide alors le premier pion 26 dans une troisième partie 253 de la piste 25, entraînant le pion 26 légèrement vers le haut, par rapport à l'axe du rail 21. Dans le même temps, le deuxième pion 23 est guidé dans une deuxième partie, inclinée par rapport à l'axe du rail, de la troisième piste 28. Ainsi, par l'intermédiaire de son pion 26 et de sa piste 28, la pièce de liaison 27, et en conséquence le panneau mobile 112, basculent légèrement pour prendre la position entrebâillée.

On constate donc que, avec un mouvement de la navette 24 dans une seule direction (parallèlement au rail), qui peut être aisément motorisé, par exemple à l'aide d'un câble « push/pull », les différents mouvements du panneau mobile 112 peuvent être contrôlés. Dans une première zone Z1 (figure 2D), ce déplacement de la navette contrôle l'ouverture (louvoiement et coulissement). Dans une seconde zone Z2, il contrôle l'entrebâillement.

Dans le même temps, l'autre extrémité, ou extrémité proximale, du panneau mobile 112 doit également être guidée, de façon liée au mouvement de la navette. Comme illustré par les figures 3A à 3D, dans ce mode de réalisation, ceci est assuré à l'aide d'une biellette 31 dont le déplacement est contrôlé par l'intermédiaire d'un troisième pion 32 et d'un quatrième pion 33, circulant respectivement dans des quatrième piste 34 et cinquième piste 35 formées dans un deuxième rail 36, ou au moins à l'extrémité de ce rail.

Dans le mode de réalisation illustré, une pièce de terminaison 38 est placée à l'extrémité du rail 36. Les extrémités des deux pistes 34 et 35 sont formées dans cette pièce 38, par exemple en matière plastique (ce qui permet de définir, par exemple par moulage, la forme complexe des pistes). D'autres modes de réalisation sont possibles, chaque extrémité des deux pistes étant formée dans une pièce distincte. Ces extrémités des pistes peuvent également être formées directement dans le rail.

L'autre extrémité de la biellette 31 est montée mobile en rotation sur une pièce de liaison 37 reliée au panneau mobile 112.

Sur la figure 3A, le panneau mobile est pratiquement dans la position de coulissement. Dans cette position, les troisième et quatrième pions 32 et 33 se trouvent dans des parties 341 et 351 parallèles entre elles et à l'axe du rail 36. La biellette 31 est donc maintenue avec une inclinaison constante, choisie de façon que le panneau mobile 112 soit sensiblement parallèle au panneau fixe 111.

La figure 3B correspond au louvoiement du panneau mobile 112 et présente ce dernier dans une position correspondant sensiblement à la fin du louvoiement. Dans cette position, le quatrième pion 33 se déplace dans un portion inclinée 352 de la cinquième piste, vers le bas, alors que le troisième pion 32 reste sensiblement à la même place. De ce fait, la biellette 31 tend à se rabaisser, et à s'aligner sensiblement avec l'axe du rail 36. Ceci entraîne l'abaissement de la pièce de liaison 37, et donc de l'extrémité proximale du panneau mobile, qui vient se placer en affleurement avec le panneau fixe.

Lorsque le panneau mobile 112 est dans sa position fermée, illustrée par la figure 3C, les pions 32 et 33 sont alignés selon un axe sensiblement parallèle à l'axe du rail, et le quatrième pion 33 se trouve dans une troisième partie 353 de la piste 35, qui est également parallèle au rail 36.

Lorsque la navette 24 est déplacée dans la position d'entrebâillement (figure 2D) un basculement est appliqué au panneau mobile 112, entraînant la surélévation par rapport à la partie fixe de l'extrémité proximale du panneau mobile 112. Ceci entraîne la biellette 31 qui se redresse, les pions 32 et 33 étant alors guidés dans les portions d'extrémité 342 et 354 des pistes 34 et 35 respectivement. Le panneau mobile est ainsi maintenu dans la position entrebâillée.

Bien sûr, le déplacement de la navette 24 dans l'autre sens, dans la zone Z1, entraîne à nouveau la fermeture du panneau mobile.

La figure 4 illustre les moyens assurant le verrouillage du panneau mobile en position fermée, l'ouverture étant obturée. Ces moyens mettent en oeuvre un premier levier 41 situé à l'intérieur du véhicule et dont une première extrémité est montée mobile en rotation autour d'un axe 49 sur une pièce de liaison 42 reliée au panneau mobile 112. La deuxième extrémité du levier 41 est montée mobile en rotation autour d'une axe 45 sur une première extrémité d'un deuxième levier 44. La deuxième extrémité du levier 44 est montée mobile en rotation autour d'une axe 47 sur la navette 24.

Dans cette position fermée du panneau mobile 112, le corps 48 du premier levier 41 est sensiblement vertical (c'est-à-dire qu'il s'étend perpendiculairement à l'axe du rail 21) et le deuxième levier 44 est légèrement incliné vers l'extrémité proximale du panneau mobile 112. On note que le corps 48 du premier levier 41 porte un élément 46 en saillie qui coopère avec un axe fixe 43 du rail 21 de façon à bloquer le panneau mobile en position fermée. Cet élément en saillie 46 (ou rebord) s'étend perpendiculairement au corps 48 et comprend une surface de réception curviligne qui est, dans cette positon fermée, de préférence en contact avec l'axe fixe 43 de blocage.

Ainsi, même si une personne malveillante parvenait à introduire un outil entre l'extrémité proximale du panneau mobile 112 et la partie fixe 111, la coopération de l'axe fixe 43 du rail 21 avec l'élément en saillie 46 empêche que cette extrémité proximale soit soulevée vers l'extérieur du véhicule. En effet, le mouvement vertical du levier 41, et donc de l'élément en saillie 46, est bloqué par l'axe fixe 43.

On comprend aisément que lorsque le panneau mobile 112 est entrebâillé à partir de cette position fermée et verrouillée de la figure 4, la navette 24 se déplace vers la gauche dans le rail 21. Le deuxième levier 44, qui est solidaire de la navette 24, se déplace par conséquent vers la gauche et entraîne en pivotement, autour de l'axe 49, le premier levier 41 dans le sens des aiguilles d'une montre. Lorsque l'élément en saillie 46 du levier 41 n'est plus en contact avec l'axe fixe 43, le panneau mobile 112 est déverrouillé. La première piste 25 guide alors le premier pion 26 dans une troisième partie 253 de la piste 25, entraînant le pion 26 légèrement vers le haut, par rapport à l'axe du rail 21. Dans le même temps, le deuxième pion 23 est guidé dans une deuxième partie, inclinée par rapport à l'axe du rail, de la troisième piste 28.

On comprend également que lorsque le panneau mobile 112 est déplacé vers le plan de coulissement à partir de cette position fermée et verrouillée de la figure 4, la navette 24 se déplace vers la droite dans le rail 21. Le deuxième levier 44 qui est solidaire de la navette 24 se déplace vers la droite et entraîne en pivotement, autour de l'axe 49, le premier levier 41 dans le sens inverse des aiguilles d'une montre. Lorsque l'élément en saillie 46 du levier 41 n'est plus en contact avec l'axe fixe 43, le panneau mobile 112 est déverrouillé.

La mise en oeuvre de ces moyens de verrouillage est avantageuse en ce sens qu'elle ne nécessite pas d'opération supplémentaire pour le verrouillage du panneau mobile. En d'autres termes, ce verrouillage se fait « naturellement ». En outre, le déverrouillage du panneau mobile est automatique dans les deux directions de déplacement F1 de la navette 24.

Ces moyens de verrouillage sont de préférence mis en oeuvre de chaque côté du pavillon (c'est-à-dire qu'on prévoit un axe fixe de blocage sur chaque rail).

Ce principe de verrouillage peut être adapté à une biellette qui remplacerait la navette 24.

Dans le mode de réalisation illustré, le panneau mobile vient prendre position à côté de la partie fixe, pour former le pavillon vitré (dans la position d'obturation). Dans d'autres modes de réalisation, la partie fixe peut présenter un contour correspondant au contour du pavillon, l'ouverture étant alors définie dans cette partie fixe.

## Revendications

1. Pavillon vitré de véhicule automobile, comprenant une partie fixe (111) et un panneau mobile (112) par rapport à la partie fixe (111), apte à obturer une ouverture (13) formée dans ou à côté de ladite partie fixe (111), dans une position d'obturation,
le déplacement dudit panneau mobile (112) étant mis en ouvre à l'aide de deux navettes (24) guidées en translation respectivement dans deux premiers rails (21), chacune desdites navettes (24) portant une première piste (25) coopérant avec un premier pion (26) solidaire de la partie avant dudit panneau mobile (112), de façon à assurer, lorsque les navettes (24) sont déplacées dans lesdits premiers rails (21), dans une première zone de déplacement (Z1) :
- un mouvement de louvoiement dudit panneau mobile (112), lorsque chaque premier pion (26) se déplace dans la première piste (25) à laquelle il est associé et dans une portion inclinée (222), par rapport à l'axe de déplacement de ladite navette (24), d'une deuxième piste (22) formée dans le premier rail (21) associé, et
- un mouvement de coulissement dudit panneau mobile (112), parallèlement aux premiers rails (21), lorsque chaque premier pion (26) est en butée dans la première piste (25) à laquelle il est associé, ledit premier pion (26) se déplaçant dans une portion de ladite deuxième piste (22) s'étendant parallèlement à l'axe de déplacement de ladite navette,
**caractérisé en ce que** lesdites navettes portent un deuxième pion (23) coopérant, lorsque le panneau mobile (112) est dans ladite position d'obturation, avec une première partie (281), parallèle à l'axe du premier rail (21), d'une troisième piste (28) solidaire dudit panneau mobile (112), ladite troisième piste (28) comprenant une deuxième partie, inclinée par rapport à l'axe du premier rail (21), configurée de façon que, lorsque le panneau mobile (112) est dans ladite position d'obturation, un déplacement desdites navettes (24) dans une seconde zone de déplacement (Z2) assure un basculement dudit panneau mobile (112) par rapport à ladite partie fixe (111).

2. Pavillon vitré selon la revendication 1, **caractérisé en ce que** ladite troisième piste (28) est ouverte à l'une de ses extrémités, de façon à se désolidariser dudit deuxième pion (23) lors du mouvement de coulissement.

3. Pavillon vitré selon la revendication 2, **caractérisé en ce que** ladite extrémité ouverte de ladite troisième piste (28) se prolonge par une première portion parallèle à l'axe de déplacement de la navette, puis par une deuxième portion inclinée par rapport audit axe de déplacement.

4. Pavillon vitré selon l'une quelconque des revendications 1 à 3, **caractérisé en ce que** ladite troisième piste (28) est portée par une pièce de liaison (27) portant également ledit premier pion (26), ce dernier étant conçu de façon à autoriser le basculement du panneau mobile (112).

5. Pavillon vitré selon l'une quelconque des revendications là 4, **caractérisé en ce que** ladite première piste (25) présente :
- une première extrémité, avec laquelle ledit premier pion est en butée, lors du mouvement.de coulissement ;
- une première portion (251), s'étendant transversalement par rapport à l'saxe de déplacement de la navette, à partir de ladite première extrémité, et dans laquelle se déplace ledit premier pion lors du mouvement de louvoiement ;
- une deuxième portion (252) s'étendant parallèlement à l'axe de déplacement de la navette, à partir de ladite première portion, dans laquelle se trouve ledit premier pion dans ladite position d'obturation ;
- une troisième portion (253) s'étendant transversalement par rapport à l'axe de déplacement de la navette, à partir de ladite deuxième portion, dans laquelle se déplace ledit premier pion lors du début dudit basculement ;
- une seconde extrémité, avec laquelle ledit premier pion est en butée, lors de la fin dudit basculement.

6. Pavillon vitré selon l'une quelconque des revendications 1 à 5, **caractérisé en ce que** lesdites navettes (24) sont reliées audit panneau mobile (112) au voisinage d'une première extrémité de ce dernier, dite extrémité distale, selon l'axe de déplacement desdites navettes,
et **en ce que** ledit panneau mobile (112) est solidaire, au voisinage de sa seconde extrémité, dite extrémité proximale, de biellettes (31) permettant de contrôler; complémentairement avec lesdits deuxièmes pions (23), le basculement du panneau mobile (112).

7. Pavillon vitré selon la revendication 6, **caractérisé en ce que** chacune desdites biellettes (31) est montée mobile en rotation par rapport audit panneau mobile (112), et porte un troisième (32) et un quatrième (33) pions guidés respectivement dans une quatrième (34) et une cinquième (35) pistes formées dans un deuxième rail (36), s'étendant dans le prolongement d'un desdits premiers rails.

8. Pavillon vitré selon la revendication 7, **caractérisé en ce que** lesdites quatrième (34) et cinquième (35) pistes sont configurées pour contrôler le déplacement de ladite extrémité proximale du panneau mobile (112) lors dudit basculement, dudit louvoiement et dudit coulissement.

9. Pavillon vitré selon la revendication 8, **caractérisé en ce que** lesdites quatrième (34) et cinquième (35) pistes présentent :
- une première portion (341, 351), correspondant au mouvement de coulissement, dans laquelle elles s'étendent parallèlement à l'axe dudit deuxième rail ;
- une deuxième portion (342, 352), correspondant au mouvement de louvoiement, dans laquelle lesdits troisième et quatrième pions sont guidés de façon à s'aligner sensiblement parallèlement à l'axe dudit deuxième rail, lorsque le panneau mobile (112) est dans sa position d'obturation ;
- une troisième portion (343, 353), correspondant audit basculement, dans laquelle elles s'éloignent l'une de l'autre, de façon que ladite biellette se redresse.

10. Pavillon vitré selon l'une quelconque des revendications 1 à 9, **caractérisé en ce qu'**il comprend des moyens de verrouillage du panneau mobile (112) dans ladite position d'obturation.

11. Pavillon vitré selon la revendication 10, **caractérisé en ce que** lesdits moyens de verrouillage du panneau mobile (112) comprennent au moins un élément (41) solidaire en rotation du panneau mobile (112) et apte à coopérer avec des moyens de blocage (43) fixes.

12. Véhicule automobile comprenant un pavillon vitré selon l'une quelconque des revendications 1 à 11, ledit pavillon comprenant une partie fixe (111) et un panneau mobile (112) par rapport à la partie fixe (111), apte à obturer une ouverture formée dans ou à côté de ladite partie fixe (111), dans une position d'obturation,
le déplacement dudit panneau mobile (112) étant mis en oeuvre à l'aide de deux navettes (24) guidées en translation respectivement dans deux premiers rails (21), chacune desdites navettes (24) portant une première piste (25) coopérant avec un premier pion (26) solidaire dudit panneau mobile (112), de façon à assurer, lorsque les navettes (24) sont déplacées dans lesdits premiers rails (21), dans une première zone de déplacement (Z1) :
- un mouvement de louvoiement dudit panneau mobile (112), lorsque chaque premier pion (26) se déplace dans la première piste (25) à laquelle il est associé et dans une portion inclinée (222), par rapport à l'axe de déplacement de ladite navette (24), d'une deuxième piste (22) formée dans le premier rail (21) associé, et
- un mouvement de coulissement dudit panneau mobile (112), parallèlement aux premiers rails (21), lorsque chaque premier pion (26) est en butée dans la première piste (25) à laquelle il est associé, ledit premier pion (26) se déplaçant dans une portion de ladite deuxième piste (22) s'étendant parallèlement à l'axe de déplacement de ladite navette,
**caractérisé en ce que** lesdites navettes portent un deuxième pion (23) coopérant, lorsque le panneau mobile (112) est dans ladite position d'obturation, avec une première partie (281), parallèle à l'axe du premier rails (21), d'une troisième piste (28) solidaire dudit panneau mobile (112), ladite troisième piste (28) comprenant une deuxième partie, inclinée par rapport à l'axe du premier rail (21), configurée de façon que, lorsque le panneau mobile (112) est dans ladite position d'obturation, un déplacement desdites navettes (24) dans une seconde zone de déplacement (Z2) assure un basculement dudit panneau mobile (112) par rapport à ladite partie fixe (111).

## Patentansprüche

1. Glasdach für Kraftfahrzeug, das einen stationären Teil (111) und eine relativ zu dem stationären Teil (111) bewegliche Platte (112) zum Verschließen einer in oder neben dem stationären Teil (111) ausgebildeten Öffnung (13) in einer Verschlussposition umfasst,
wobei die Bewegung der beweglichen Platte (112) mit Hilfe von zwei translatorisch jeweils in zwei ersten Schienen (21) geführten Schiebeelementen (24) umgesetzt wird, wobei jedes der Schiebeelemente (24) eine erste Laufbahn (25) trägt, die mit einem ersten Zapfen (26) zusammenwirkt, der fest mit dem vorderen Teil der beweglichen Platte (112) verbunden ist, so dass, wenn die Schiebeelemente (24) in den ersten Schienen (21) bewegt werden, Folgendes in einer ersten Bewegungszone (Z1) sichergestellt ist:
- eine Gierbewegung der beweglichen Platte (112), wenn sich jeder erste Zapfen (26) in der ihm zugeordneten ersten Laufbahn (25) und in einem relativ zu der Bewegungsachse des Schiebeelements (24) geneigten Abschnitt (222) einer zweiten Laufbahn (22) in der ersten zugeordneten Schiene (21) bewegt, und
- eine Gleitbewegung der beweglichen Platte (112) parallel zu den ersten Schienen (21), wenn jeder erste Zapfen (26) in der ersten ihm zugeordneten Laufbahn (25) in Anschlag ist, wobei sich der erste Zapfen (26) in einem zu der Bewegungsachse des Schiebeelements parallelen Abschnitt der zweiten Laufbahn (22) bewegt,
**dadurch gekennzeichnet, dass** die Schiebeelemente einen zweiten Zapfen (23) tragen, der, wenn die bewegliche Platte (112) in der Verschlussposition ist, mit einem ersten zu der Achse der ersten Schienen (21) parallelen Teil (281) einer dritten Laufbahn (28) zusammenwirkt, die fest mit der beweglichen Platte (112) verbunden ist, wobei die dritte Laufbahn (28) einen relativ zu der Achse der ersten Schiene (21) geneigten zweiten Teil umfasst, der derart ausgelegt ist, dass, wenn sich die bewegliche Platte (112) in der Verschlussposition befindet, eine Bewegung der Schiebeelemente (24) in einer zweiten Bewegungszone (Z2) ein Kippen der beweglichen Platte (112) relativ zu dem stationären Teil (111) sicherstellt.

2. Glasdach nach Anspruch 1, **dadurch gekennzeichnet, dass** die dritte Laufbahn (28) an einem ihrer Enden derart offen ist, dass sie sich von dem zweiten Zapfen (23) bei der Gleitbewegung trennt.

3. Glasdach nach Anspruch 2, **dadurch gekennzeichnet, dass** das offene Ende der dritten Laufbahn (28) durch einen ersten Abschnitt parallel zu der Bewegungsachse des Schiebeelements verlängert, und dann durch einen zweiten Abschnitt, der relativ zu der Bewegungsachse geneigt ist.

4. Glasdach nach einem der Ansprüche 1 bis 3, **dadurch gekennzeichnet, dass** die dritte Laufbahn (28) von einem Verbindungsteil (27) getragen wird, das auch den ersten Zapfen (26) trägt, wobei Letzterer derart konzipiert ist, dass er das Kippen der beweglichen Platte (112) erlaubt.

5. Glasdach nach einem der Ansprüche 1 bis 4, **dadurch gekennzeichnet, dass** die erste Laufbahn (25) Folgendes aufweist:
- ein erstes Ende, mit dem der erste Zapfen während der Gleitbewegung in Anschlag ist,
- einen zweiten Abschnitt (251), der sich quer zu der Bewegungsachse des Schiebeelements erstreckt, ausgehend von dem ersten Ende, und in dem sich der erste Zapfen während der Gierbewegung bewegt,
- einen zweiten Abschnitt (252), der sich parallel zu der Bewegungsachse des Schiebeelements erstreckt, ausgehend von dem ersten Abschnitt, in dem sich der erste Zapfen in der Verschlussposition befindet,
- einen dritten Abschnitt (253), der sich quer zu der Bewegungsachse des Schiebeelements erstreckt, ausgehend von dem zweiten Abschnitt, in dem sich der erste Zapfen zu Beginn des Kippens bewegt,
- ein zweites Ende, mit dem der erste Zapfen bei dem Ende des Kippens in Anschlag ist.

6. Glasdach nach einem der Ansprüche 1 bis 5, **dadurch gekennzeichnet, dass** die Schiebeelemente (24) mit der beweglichen Platte (112) in der Nähe eines ersten Endes der Letztgenannten, distales Ende genannt, entlang der Bewegungsachse der Schiebeelemente verbunden sind,
und dass die bewegliche Platte (112) in der Nähe ihres zweiten Endes, proximales Ende genannt, mit Schwingarmen (31) fest verbunden ist, die es erlauben, ergänzend mit den zweiten Zapfen (23) das Kippen der beweglichen Platte (112) zu steuern.

7. Glasdach nach Anspruch 6, **dadurch gekennzeichnet, dass** jeder der Schwingarme (31) in Drehung in Bezug auf die bewegliche Platte (112) beweglich montiert ist und einen dritten (32) und einen vierten (33) Zapfen trägt, die jeweils in einer vierten (34) und einer fünften (35) Laufbahn geführt sind, die in einer zweiten Schiene (36) ausgebildet sind, die sich in der Verlängerung einer der ersten Schienen erstrecken.

8. Glasdach nach Anspruch 7, **dadurch gekennzeichnet, dass** die vierte (34) und fünfte (35) Laufbahn dazu ausgelegt sind, die Bewegung des proximalen Endes der beweglichen Platte (112) beim Kippen, Gieren und Gleiten zu steuern.

9. Glasdach nach Anspruch 8, **dadurch gekennzeichnet, dass** die vierte (34) und fünfte (35) Laufbahn Folgendes aufweisen:
- einen ersten Abschnitt (341, 351), der der Gleitbewegung entspricht, in dem sie sich parallel zu der Achse der zweiten Schiene erstrecken,
- einen zweiten Abschnitt (342, 352), der der Gierbewegung entspricht, in dem der dritte und vierte Zapfen derart geführt sind, dass sie sich im Wesentlichen parallel zu der Achse der zweiten Schiene ausrichten, wenn die bewegliche Platte (112) in ihrer Verschlussposition ist,
- einen dritten Abschnitt (343, 353), der dem Kippen entspricht, in dem sie sich voneinander derart entfernen, dass sich der Schwingarm aufstellt.

10. Glasdach nach einem der Ansprüche 1 bis 9, **dadurch gekennzeichnet, dass** es Mittel zum Verriegeln der beweglichen Platte (112) in der Verschlussposition umfasst.

11. Glasdach nach Anspruch 10, **dadurch gekennzeichnet, dass** die Verriegelungsmittel der beweglichen Platte (112) mindestens ein Element (41) umfassen, das in Drehung mit der beweglichen Platte (112) fest verbunden und dazu geeignet ist, mit stationären Blockierungsmitteln (43) zusammenzuwirken.

12. Kraftfahrzeug, das ein Glasdach nach einem der Ansprüche 1 bis 11 umfasst, wobei das Dach einen stationären Teil (111) und eine relativ zu dem stationären Teil (111) bewegliche Platte (112) zum Verschließen einer in oder neben dem stationären Teil (111) ausgebildeten Öffnung in einer Verschlussposition umfasst,
wobei die Bewegung der beweglichen Platte (112) mit Hilfe von zwei translatorisch jeweils in zwei ersten Schienen (21) geführten Schiebeelementen (24) umgesetzt wird, wobei jedes der Schiebeelemente (24) eine erste Laufbahn (25) trägt, die mit einem ersten Zapfen (26) zusammenwirkt, der fest mit der beweglichen Platte (112) verbunden ist, so dass, wenn die Schiebeelemente (24) in den ersten Schienen (21) bewegt werden, Folgendes in einer ersten Bewegungszone (Z1) sichergestellt wird:
- eine Gierbewegung der beweglichen Platte (112), wenn sich jeder erste Zapfen (26) in der ihm zugeordneten ersten Laufbahn (25) und in einem relativ zu Bewegungsachse des Schiebeelements (24) geneigten Abschnitt (222) einer zweiten Laufbahn (22) in der ersten zugeordneten Schiene (21) bewegt, und
- eine Gleitbewegung der beweglichen Platte (112) parallel zu den ersten Schienen (21), wenn jeder erste Zapfen (26) in der ersten ihm zugeordneten Laufbahn (25) in Anschlag ist, wobei sich der erste Zapfen (26) in einem zu der Bewegungsachse des Schiebeelements parallelen Abschnitt der zweiten Laufbahn (22) bewegt,
**dadurch gekennzeichnet, dass** die Schiebeelemente einen zweiten Zapfen (23) tragen, der, wenn die bewegliche Platte (112) in der Verschlussposition ist, mit einem ersten zu der Achse der ersten Schienen (21) parallelen Teil (281) einer dritten Laufbahn (28) zusammenwirkt, die fest mit der beweglichen Platte (112) verbunden ist, wobei die dritte Laufbahn (28) einen relativ zu der Achse der ersten Schiene (21) geneigten zweiten Teil umfasst, der derart ausgelegt ist, dass, wenn sich die bewegliche Platte (112) in der Verschlussposition befindet, eine Bewegung der Schiebeelemente (24) in einer zweiten Bewegungszone (Z2) ein Kippen der beweglichen Platte (112) relativ zu dem stationären Teil (111) sicherstellt.

## Claims

1. Glazed roof for a motor vehicle, said roof comprising a fixed part (111) and a panel (112) which is movable in relation to the fixed part (111) and is capable of occluding, in an occluding position, an opening (13) formed in or beside the said fixed part (111),
the displacement of the said movable panel (112) being carried out with the aid of two shuttles (24) which are respectively guided in translation within two first rails (21), each of the said shuttles (24) carrying a first track (25) which cooperates with a first pin (26), which is integral with the front part of the said movable panel (112), in such a way to bring about, when the shuttles (24) are displaced within the said first rails (21), within a first displacement zone (Z1) :
- a swinging movement of the said movable panel (112), when each first pin (26) is displaced within the first track (25) with which it is associated and within a portion (222), which is inclined in relation to the axis of displacement of the said shuttle (24), of a second track (22) which is formed in the associated first rail (21); and
- a sliding movement of the said movable panel (112), parallel to the first rails (21), when each first pin (26) is in abutment within the first track (25) with which it is associated, the said first pin (26) being displaced within a portion of the said second track (22) which extends parallel to the axis of displacement of the said shuttle,
**characterised in that** the said shuttles carry a second pin (23) which cooperates, when the movable panel (112) is in the said occluding position, with a first part (281), which is parallel to the axis of the first rail (21), of a third track (28) which is integral with the said movable panel (112), the said third track (28) comprising a second part, which is inclined in relation to the axis of the first rail (21) and is configured in such a way that, when the movable panel (112) is in the said occluding position, a displacement of the said shuttles (24) within a second displacement zone (Z2) brings about a tilting of the said movable panel (112) in relation to the said fixed part (111).

2. Glazed roof according to Claim 1, **characterised in that** the said third track (28) is open at one of its ends, in such a way as to detach itself from the said second pin (23) when the sliding movement occurs.

3. Glazed roof according to Claim 2, **characterised in that** the said open end of the said third track (28) is prolonged by a first portion which is parallel to the axis of displacement of the shuttle, and then by a second portion which is inclined in relation to the said axis of displacement.

4. Glazed roof according to any of claims 1 to 3, **characterised in that** the said third track (28) is carried by a linking piece (27) which also carries the said first pin (26), the latter being designed in such a way as to allow tilting of the movable panel (112).

5. Glazed roof according to any of claims 1 to 4, **characterised in that** the said first track (25) has:
- a first end with which the said first pin is in abutment when the sliding movement occurs;
- a first portion (251) which extends transversely in relation to the axis of displacement of the shuttle, starting from the said first end, and within which the said first pin is displaced when the swinging movement occurs;
- a second portion (252) which extends parallel to the axis of displacement of the shuttle, starting from the said first portion, and within which the said first pin is located in the first occluding position;
- a third portion (253) which extends transversely in relation to the axis of displacement of the shuttle, starting from the said second portion, and within which the said first pin is displaced when the said tilting starts; and
- a second end with which the said first pin is in abutment when the said tilting ends.

6. Glazed roof according to any of claims 1 to 5, **characterised in that** the said shuttles (24) are connected to the said movable panel (112) in the vicinity of a first end of the latter, which is referred to as the "distal end", along the axis of displacement of the said shuttles,
and **in that** the said movable panel (112) is integral, in the vicinity of its second end, which is referred to as the "proximal end", with links (31) which make it possible to control, in a manner complementary with the said second pins (23), the tilting of the movable panel (112).

7. Glazed roof according to claim 6, **characterised in that** each of the said links (31) is mounted so as to be movable in rotation in relation to the said movable panel (112), and carries a third (32) and a fourth (33) pin, which pins are guided, respectively, within a fourth (34) and a fifth (35) track, which tracks are formed in a second rail (36) which extends in the prolongation of one of the said first rails.

8. Glazed roof according to claim 7, **characterised in that** the said fourth (34) and fifth (35) tracks are configured so as to control the displacement of the said proximal end of the movable panel (112) when the said tilting, the said swinging and the said sliding occur.

9. Glazed roof according to claim 8, **characterised in that** the said fourth (34) and fifth (35) tracks have:
- a first portion (341, 351) which corresponds to the sliding movement and within which they extend parallel to the axis of the said second rail;
- a second portion (342, 352) which corresponds to the swinging movement and within which the said third and fourth pins are guided in such a way as to be aligned substantially parallel to the axis of the said second rail, when the movable panel (112) is in its occluding position; and
- a third portion (343, 353) which corresponds to the said tilting and within which said tracks move away from one another in such a way that the said link straightens up again.

10. Glazed roof according to any of claims 1 to 9, **characterised in that** it comprises means for locking the movable panel (112) in the said occluding position.

11. Glazed roof according to claim 10, **characterised in that** the said means for locking the movable panel (112) comprise at least one element (41) which is integral in rotation with the movable panel (112) and is capable of cooperating with fixed immobilising means (43).

12. Motor vehicle comprising a glazed roof according to any of Claims 1 to 11, the said roof comprising a fixed part (111) and a panel (112) which is movable in relation to the fixed part (111) and is capable of occluding, in an occluding position, an opening formed in or beside the said fixed part (111),
the displacement of the said movable panel (112) being carried out with the aid of two shuttles (24) which are respectively guided in translation within two first rails (21), each of the said shuttles (24) carrying a first track (25) which cooperates with a first pin (26), which is integral with the said movable panel (112), in such a way to bring about, when the shuttles (24) are displaced within the said first rails (21), within a first displacement zone (Z1):
- a swinging movement of the said movable panel (112), when each first pin (26) is displaced within the first track (25) with which it is associated and within a portion (222), which is inclined in relation to the axis of displacement of the said shuttle (24), of a second track (22) which is formed in the associated first rail (21); and
- a sliding movement of the said movable panel (112), parallel to the first rails (21), when each first pin (26) is in abutment within the first track (25) with which it is associated, the said first pin (26) being displaced within a portion of the said second track (22) which extends parallel to the axis of displacement of the said shuttle,
**characterised in that** the said shuttles carry a second pin (23) which cooperates, when the movable panel (112) is in the said occluding position, with a first part (281), which is parallel to the axis of the first rail (21), of a third track (28) which is integral with the said movable panel (112), the said third track (28) comprising a second part, which is inclined in relation to the axis of the first rail (21) and is configured in such a way that, when the movable panel (112) is in the said occluding position, a displacement of the said shuttles (24) within a second displacement zone (Z2) brings about a tilting of the said movable panel (112) in relation to the said fixed part (111).
